# EUROPÄISCHE PATENTSCHRIFT

(11) **EP 3 313 714 B1**
(45) Veröffentlichungstag und Bekanntmachung des Hinweises auf die Patenterteilung: **29.04.2020**
(21) Anmeldenummer: 16731101.8
(22) Anmeldetag: 16.06.2016
(51) Int. Cl.: B62D 15/02, B60W 30/06, B60W 30/10

(54) **ENGSTELLENASSISTENZSYSTEM IN EINEM KRAFTFAHRZEUG**
NARROW-PASSAGE ASSISTANCE SYSTEM IN A MOTOR VEHICLE
SYSTÈME D'AIDE EN CAS DE ZONE ÉTROITE POUR UN VÉHICULE AUTOMOBILE

(30) Priorität: 24.06.2015 DE 102015211736
(43) Veröffentlichungstag der Anmeldung: 02.05.2018
(73) Patentinhaber: Bayerische Motoren Werke Aktiengesellschaft, 80809 München (DE)
(72) Erfinder: ADIPRASITO, Bartono, 84184 Tiefenbach (DE); MUSSNER, Helena, 80636 München (DE)
(86) Internationale Anmeldenummer: PCT/EP2016/063915
(87) Internationale Veröffentlichungsnummer: WO 2016/207058

(56) Entgegenhaltungen:
- DE-A1-102007 027 495
- DE-A1-102010 012 954
- US-A1- 2013 197 758
- US-A1- 2015 088 360

## Beschreibung

Die Erfindung bezieht sich auf ein Engstellenassistenzsystem in einem Kraftfahrzeug.

Die Anmelderin entwickelte bereits einen Prototypen eines sogenannten Engstellenassistenten, durch den vorausschauend eine Engstelle vermessen wird und dem Fahrer mitgeteilt wird, ob diese zum Durchfahren mit dem eigenen Fahrzeug ausreichend breit ist. Das bisher von der Anmelderin entwickelte Engstellenassistenzsystem soll dem Fahrer beispielsweise in Autobahnbaustellen helfen, schmale Passagen richtig einzuschätzen und beim Durchfahren präzise den Kurs zu halten. Zur Vermessung einer Engstelle blickt die Elektronik mit geeigneter Sensorik (z.B. Laserscanner, Radar und/oder Kamera) nach vorn und nutzt weitere Sensoren (z.B. Radare und/oder Ultraschallsensoren), die den seitlichen Abstand zu Hindernissen wie Leitplanken oder anderen Fahrzeugen taxieren.
Im Alltagsverkehr ließe sich der Engstellenassistent beispielsweise im Verlauf von Autobahnbaustellen nutzen, wo zwei parallel zueinander angeordnete Fahrspuren für den Verkehr in eine Richtung ausgewiesen, aufgrund ihrer reduzierten Breite jedoch nur unter hoher Anspannung zu nutzen sind. Eine besondere Herausforderung stellen dabei vor allem Überholmanöver dar. Der Engstellenassistent unterstützt den Fahrer durch einen Hinweis, wenn das System erkennt, dass die Vorbeifahrt an einem auf der rechten Spur fahrenden Lkw risikobehaftet sein kann. Reicht der auf seiner Fahrspur verbleibende Platz nicht aus, um das Manöver risikofrei zu absolvieren, wird der Fahrer frühzeitig darauf hingewiesen. Bei ausreichend breiter Fahrspur erhält der Fahrer auch während des Überholvorgangs Hinweise, die es ihm ermöglichen, den idealen Abstand auf beiden Seiten zu halten. Z.B. können im Head-up-Display Anzeigen über den vorhandenen Abstand zu beiden Seiten informieren. Sobald die Distanz zur Leitplanke beziehungsweise zum Fahrzeug auf der Parallelspur ein definiertes Maß unterschreitet, erfolgt zusätzlich ein kurzer Lenkimpuls. Folgt der Fahrer diesem, kehrt sein Fahrzeug auf den optimalen Kurs zurück.

Eine spezielle Funktion eines Engstellenassistenten ist beispielsweise auch aus der DE 10 2011 077 975 A1 bekannt. Hierbei werden in einem Kraftfahrzeug ein abstandsbezogenes Fahrgeschwindigkeitsregelsystem und ein Engstellenassistenzsystem derart gekoppelt, dass das Engstellenassistenzsystem im aktivierten Zustand die Funktionsweise des abstandsbezogenen Fahrgeschwindigkeitsregelsystems beeinflusst.

Die Druckschriften US 2015/0088360 A1 beschreibt ein Verfahren zur Durchführung eines autonomen Parkvorgangs eines Kraftfahrzeugs.

Die Druckschrift US 2013/0197758 A1 beschreibt eine automatische Fahrzeug-Lenksteuervorrichtung, wobei ein automatisches Lenkmittel zum Durchführen einer Lenksteuerung vorgesehen ist und die Lenksteuerung derart erfolgt, dass sich das Fahrzeug unter Beachtung einer erwarteten Bewegungsbahn bewegt, welche durch ein Bewegungsbahn-Berechnungsmittel bestimmt wird.

Die Offenlegungsschrift DE 10 2010 012 954 A1 beschreibt ein Verfahren zum Betrieb einer Fahrerassistenzvorrichtung eines auf einer Fahrbahn befindlichen Fahrzeugs, bei dem auf und neben der Fahrbahn befindliche Hindernisse erfasst werden. Hierbei wird der Bewegungsverlauf der Hindernisse erfasst und ausgewertet. Sofern sich eine Bewegung eines erfassten Hindernisses durch Gleichmäßigkeit auszeichnet, wird ein seitlicher Mindestabstand nicht verändert.

Die Offenlegungsschrift DE 10 2007 027 495 A1 ist als nächstliegender Stand der Technik nach dem Oberbegriff des Anspruchs 1 zu sehen und beschreibt ein Verfahren zur Unterstützung des Fahrers eines Kraftfahrzeugs bei der Querführung des Kraftfahrzeugs, wobei seitliche Objekte, an denen das Kraftfahrzeug seitlich vorbeifahren wird, erfasst werden. Hierbei werden Seitenabstände zwischen dem Kraftfahrzeug und den erfassten Objekten ermittelt, wobei bei Unterschreiten von vorgebbaren Seitenabstandsgrenzen ein selbsttätiger Lenkeingriff zur Vergrößerung des Seitenabstands ausgelöst wird.

Es ist Aufgabe der Erfindung, die Anwendungsbereiche eines Engstellenassistenzsystems zu erweitern und im Hinblick auf eine weitere Erhöhung der Sicherheit und des Komforts auszubauen.

Diese Aufgabe wird erfindungsgemäß durch den Gegenstand des Anspruchs 1 gelöst. Die abhängigen Ansprüche sind vorteilhafte Weiterbildungen der Erfindung.

Das erfindungsgemäße Engstellenassistenzsystem für ein Kraftfahrzeug (Ego-Fahrzeug) weist mindestens eine elektronische Steuereinheit auf, die in Abhängigkeit von den Signalen verschiedener an sich bekannter Sensoren (Radar, Video, Ultraschall, Laser....) zur Erfassung seitlicher Hindernisse eine Engstelle in Form vom Vorhandensein zweier das Ego-Fahrzeug beidseitig einengender Objekte erkennt und mittels mindestens eines querführenden Aktuators (insbesondere einer aktiven Lenkungsvorrichtung) eine querführende Positionierung des Ego-Fahrzeuges zwischen den beiden Objekten steuert. Hierbei sei sowohl eine Lenkunterstützung als auch eine automatische Lenkung umfasst. Die Steuereinheit enthält insbesondere in Form eines Software-Programms ein Querführungsmodul, das derart ausgestaltet ist, dass es zwischen dynamischen und statischen Objekten unterscheiden kann. Bewegt sich ein Objekt, wie insbesondere ein auf einer Nachbarspur fahrendes Fahrzeug, wird es als dynamisches Objekt eingestuft. Beispielsweise erkannte Spurbegrenzungslinien, Leitplanken oder Tunnelwände werden als statische Objekte eingestuft. Bei Erkennung eines statischen Objekts auf einer Seite und eines dynamischen Objekts auf der anderen Seite des Ego-Fahrzeuges wird bei Bedarf eine querführende Positionierung des Ego-Fahrzeuges näher an das statische Objekt vorgenommen.

Erfindungsgemäß ist das Querführungsmodul weiterhin derart ausgestaltet, dass zwischen weichen und harten Objekten unterschieden wird. Dynamische Objekte werden dabei bevorzugt stets als harte Objekte eingestuft. Bei statischen Objekten werden insbesondere starre Leitplanken oder Tunnelwände als harte Objekte eingestuft und insbesondere Spurbegrenzungslinien, die zur Not überfahren werden könnten, als weiche Objekte. Bei Erkennung eines harten Objekts auf einer Seite und eines weichen Objekts auf der anderen Seite wird erfindungsgemäß eine querführende Positionierung des Ego-Fahrzeuges näher an das weiche Objekt vorgenommen.

Der Erfindung liegen folgende Überlegungen, Erkenntnisse und Ideen zugrunde:
Die Erfindung betrifft die Regelung eines Engstellenassistenten als Erweiterung des Spurhalteassistenten. Der Spurhalteassistent erfasst die vor dem Fahrzeug liegende Fahrbahn und deren Markierungen mit einer Kamera am Spiegel in der Windschutzscheibe. Mit der Kamera werden die Fahrstreifenmarkierungen aufgenommen, um mittels eines Steuergerätes die aktuelle Position des Fahrzeugs zu erfassen. Steuert der Fahrer unbeabsichtigt über die Linien, warnt der Assistent.

Engstellenassistenten erfassen den Fahrbahnverlauf mittels verschiedener Sensoren, wie beispielsweise Kameras, Laserscanner, Radar oder Ultraschallsensoren. Seitliche Hindernisse, wie zum Beispiel Fremdfahrzeuge oder Leitplanken, sowie deren Abstand zum eignen Fahrzeug werden aufgenommen. Damit kann der Fahrer auf eine optimale Positionierung seines Fahrzeugs, beispielsweise im Head-Up-Display, hingewiesen werden. Weiterhin kann im Gefahrenfall deutlich gewarnt oder aktiv in die Lenkung eingegriffen werden.

Es gibt Systeme die nicht aktiv zwischen verschiedenen Arten von Objekten unterscheiden. So wird nicht differenziert, ob es sich um eine statische Seitenbegrenzung oder um ein dynamisches Fremdfahrzeug handelt.

Dies führt zum einen dazu, dass der vom Fahrer in natürlicher Weise eingehaltene Sicherheitspuffer zu einem dynamischen Objekt nicht eingehalten wird. Sich bewegende Objekte verändern Ihre Querposition in der Spur, wodurch ihr Verhalten nicht vorhersehbar ist.

Bei bisherigen Systemen wird nicht unterschieden, ob ein Objekt eine Eigenschaft "hart" oder eine Eigenschaft "weich" aufweist. "Harte" Objekte, wie z.B. andere Fahrzeuge oder Leitplanken, dürfen nicht berührt werden und ein gewisser Sicherheitsabstand muss auch hier eingehalten werden. "Weiche" Objekte, wie z.B. Fahrbahnlinien, können im Gefahrenfall vom Fahrer überfahren werden.

Die Steuerung des Engstellenassistenten soll erfindungsgemäß auf mindestens ein dynamisches Objekt, wie zum Beispiel einen anderen Verkehrsteilnehmer, und/oder ein statisches Objekt, wie z.B. eine Leitplanke, regeln. Dabei soll zur seitlichen Orientierung des Systems primär das statische Objekt, wie beispielsweise eine Leitplanke oder auch eine Tunnelwand, genutzt werden.

Befindet sich beispielsweise vor dem Fahrzeug eine Engstelle zwischen einer Leitplanke (statisches Objekt) und einem Lastkraftwagen (dynamisches Objekt), wäre die natürliche Haltung des Fahrers etwas näher zur statischen Leitplanke zu fahren und einen (größeren) Sicherheitsabstand zum dynamischen Lastwagen zu halten. Dieser natürliche "Ausweichvorgang" wird erfindungsgemäß von dem Engstellenassistenten automatisch ausgeführt. Dabei orientiert sich das System in der Engstelle also nicht an dem Lastwagen, dem dynamischen Objekt, sondern hauptsächlich an der Leitplanke, also dem statischen Objekt.

Weiterhin soll der erfindungsgemäße Engstellenassistent zwischen verschiedenen Eigenschaften von Objekten, insbesondere von den statischen Objekten, unterscheiden und entsprechend die Querposition regeln können. Derartige Eigenschaften sind, wie oben bereits erwähnt, nicht nur statische oder dynamische Objekte, sondern auch ob diese "hart" oder "weich" sind. Harte Objekte bzw. Begrenzungen sind Leitplanken, Wände oder Fahrzeuge, die einen entsprechenden Schaden bei Kontakt hervorrufen können. Weiche Objekte bzw. Begrenzungen sind beispielsweise Fahrbahnmarkierungen (z.B. Leitlinien), bei denen eine Annäherung oder ein Überfahren keine grundsätzliche Gefahr bedeutet.
Befindet sich das Fahrzeug zwischen zwei statischen harten Begrenzungen, wie einem einspurigen Tunnel, richtet sich der Engstellenassistent nach der Fahrbahnmitte aus. Fährt das Fahrzeug andererseits nun zwischen einer statisch harten Tunnelwand und einem dynamischen harten Lastwagen, wird entsprechend näher an die Tunnelwand gesteuert. Die Wand kann dabei in ihrem Verlauf gut vorhergesagt werden, wohingegen der fahrende Lastkraftwagen in seiner Spur pendelt.

Dieses Pendeln des Fremdfahrzeugs wird dadurch abgefangen, dass zwar auf Basis der erkannten Existenz des dynamischen Objektes eine Querpositionierung bestimmt wird, die näher an dem statischen Objekt liegt. Die umgesetzte Bahnkurve, auf der sich das eigene Fahrzeug im weiteren Verlauf bewegt, orientiert sich jedoch vorwiegend an dem Verlauf des statischen Objektes. Registriert das System dennoch einen zukünftigen Kollisionspunkt, kann es den Fahrer gezielt zur Übernahme auffordern.

Weiterhin soll im Falle eines dynamisch harten Lastwagens und einer statisch weichen Straßenmarkierung das Fahrzeug noch näher an die Markierung heranfahren.

Durch die Unterscheidungen von statisch und dynamisch einerseits sowie hart oder weich andererseits, ist es dem System möglich, sich weiter dem natürlichen Fahrverhalten eines Menschen anzunähern. Dies steigert das Komfortempfinden des Fahrers und dessen Vertrauen in das System, da die nun ausführbaren Eingriffe seinen natürlichen Handlungen entsprechen. Durch den erhöhten Puffer zu dynamischen Objekten, das heißt durch das primäre Regeln auf statische Objekte, müssen etwaige Pendelbewegungen der Fahrzeuge nicht nachgeregelt werden. Dadurch kann der Komfort für den Fahrer weiter erhöht werden. Weiterhin erhöht sich deutlich die Sicherheit für den Fahrer, die Fahrzeuginsassen und andere Verkehrsteilnehmer. Durch die Unterstützung beim Einstellen der entsprechend optimalen Seitenabstände können kritische Situationen und damit Kollisionen deutlich reduziert werden. Weiter verhindert das System so jeweilige Fehleinschätzungen des Fahrers über die eigene, wie auch die fremde Fahrzeugbreite. Ferner ist ein entscheidender Vorteil, dass die Positionsbestimmung von dynamischen seitlichen Objekten nicht hochgenau erfolgen muss, da die Positionierung des eigenen Fahrzeugs von der ermittelten Bewegung des seitlichen Objekts weitgehend entkoppelt wird. Weiterhin greift das System als Erweiterung auf die bisherige Hardware im Fahrzeug zurück. Damit lassen sich durch eine kosteneffektive und damit wirtschaftliche Anpassung der Regelung die Sicherheit und der Komfort des Fahrers deutlich erhöhen.

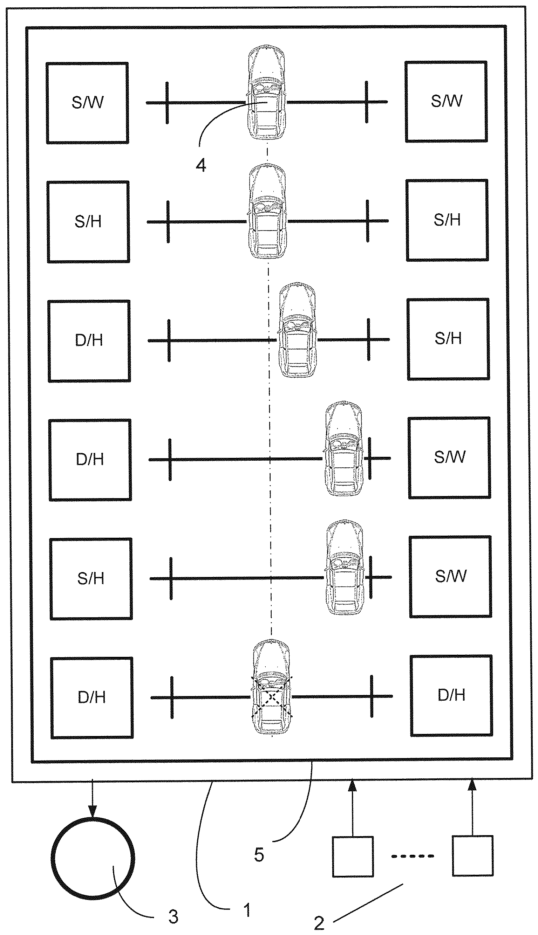

In der Zeichnung ist ein Ausführungsbeispiel der Erfindung dargestellt. Sie zeigt eine Übersicht über das grundsätzliche Regelverhalten des erfindungsgemäßen Engstellenassistenzsystems im Hinblick auf die möglichen Kombinationen zwischen dynamischen und statischen Objekten (bzw. Seitenbegrenzungen) einerseits sowie harten und weichen Objekten andererseits.

In der einzigen Figur ist schematisch eine elektronische Steuereinheit 1, die beispielsweise ein an sich bekanntes querführendes Fahrerassistenzsystem sein kann, mit einem erfindungsgemäßen Querführungsmodul 5 dargestellt. Die Steuereinheit 1 erhält die Signale diverser an sich bekannter Sensoren 2 zur Erfassung von seitlichen Hindernissen und daraus zur Erkennung von dynamischen und statischen sowie weichen und harten Objekten, durch die eine Engstelle gebildet werden kann. Ferner aktiviert die Steuereinheit 1 direkt oder indirekt eine aktive Lenkungsvorrichtung 3 zur querführenden Positionierung des Ego-Fahrzeugs 4 in Abhängigkeit von den im Querführungsmodul 5 gespeicherten Regeln und Daten.

Das Querführungsmodul 5 schreibt in Form einer Software-Funktion folgende Steuereingriffe vor, die anhand der Figur in der Reihenfolge von oben nach unten erläutert werden:
- Bei Vorhandensein zweier statischer weicher Objekte S/W auf beiden Seiten des Ego-Fahrzeuges 4 findet eine querführende Positionierung des Ego-Fahrzeuges 4 mittig zwischen die beiden Objekte statt.
- Bei Vorhandensein zweier statischer harter Objekte S/H auf beiden Seiten des Ego-Fahrzeuges 4 findet ebenfalls eine querführende Positionierung des Ego-Fahrzeuges 4 mittig zwischen die beiden Objekte statt.
- Bei Vorhandensein eines dynamischen harten Objekts D/H auf einer Seite und eines statischen harten Objekts S/H auf der anderen Seite findet eine querführende Positionierung des Ego-Fahrzeuges 4 näher an das statische harte Objekt S/H als an das dynamische harte Objekt D/H statt, aber dennoch unter Einhaltung eines definierten Sicherheitsabstands.
- Bei Vorhandensein eines dynamischen harten Objekts D/H auf einer Seite und eines statischen weichen Objekts S/W auf der andere Seite des Ego-Fahrzeuges 4 findet eine querführende Positionierung des Ego-Fahrzeuges 4 mit einem vergleichsweise geringen bis gegen Null gehenden Sicherheitsabstand näher an das statische weiche Objekt S/W statt.
- Bei Vorhandensein eines statischen harten Objekts S/H auf einer Seite und eines statischen weichen Objekts S/W auf der andere Seite des Ego-Fahrzeuges 4 findet ebenso eine querführende Positionierung des Ego-Fahrzeuges 4 mit einem vergleichsweise geringen bis gegen Null gehenden Sicherheitsabstand näher an das statische weiche Objekt S/W statt.
- Bei Vorhandensein zweier dynamischer harter Objekte D/H findet entweder eine querführende Positionierung des Ego-Fahrzeuges 4 mittig zwischen die beiden Objekte statt. Alternativ wird der Fahrer zur Fahrzeugübernahme aufgefordert, um damit ein unkomfortables Pendeln zwischen den dynamischen Objekten zu verhindern.

## Patentansprüche

1. Engstellenassistenzsystem in einem Kraftfahrzeug (4) mit mindestens einer elektronischen Steuereinheit (1), die in Abhängigkeit von den Signalen verschiedener Sensoren (2) zur Erfassung seitlicher Hindernisse eine Engstelle in Form vom Vorhandensein zweier das Ego-Fahrzeug (4) beidseitig einengender Objekte (D/H, S/H, S/W) erkennt und mittels mindestens eines querführenden Aktuators (3) eine querführende Positionierung des Ego-Fahrzeuges (4) zwischen den Objekten steuert, wobei die Steuereinheit (1) ein Querführungsmodul (5) derart enthält, dass zwischen dynamischen und statischen Objekten unterschieden wird und dass bei Vorhandensein eines statischen Objekts (S/H, S/W) auf einer Seite und eines dynamischen Objekts (D/H) auf der anderen Seite des Ego-Fahrzeuges (4) eine querführende Positionierung des Ego-Fahrzeuges (4) näher an das statische Objekt (S/H, S/W) vornehmbar ist, **dadurch gekennzeichnet, dass** das Querführungsmodul (5) weiterhin derart ausgestaltet ist, dass zwischen weichen und harten Objekten unterschieden wird und dass bei Vorhandensein eines harten Objekts (S/H, D/H) auf einer Seite und eines weichen Objekts (S/W) auf der anderen Seite eine querführende Positionierung des Ego-Fahrzeuges (4) näher an das weiche Objekt (S/W) vornehmbar ist.

2. Engstellenassistenzsystem nach einem der vorangegangenen Patentansprüche, **dadurch gekennzeichnet, dass** bei Vorhandensein eines dynamischen harten Objekts (D/H) auf einer Seite und eines statischen harten Objekts (S/H) auf der anderen Seite eine querführende Positionierung des Ego-Fahrzeuges (4) mit einem größeren Sicherheitsabstand näher an das statische Objekt (S/H) vornehmbar ist als im Fall des Vorhandenseins eines dynamischen harten Objekts (D/H) und eines statischen weichen Objekts (S/W).

3. Engstellenassistenzsystem nach einem der vorangegangenen Patentansprüche, **dadurch gekennzeichnet, dass** bei Vorhandensein eines dynamischen harten Objekts (D/H) oder eines statischen harten Objekts (S/H) auf einer Seite und eines statischen weichen Objekts (S/W) auf der andere Seite des Ego-Fahrzeuges (4) eine querführende Positionierung des Ego-Fahrzeuges (4) mit einem vergleichsweise geringen bis gegen Null gehenden Sicherheitsabstand näher an das statische weiche Objekt (S/W) vornehmbar ist.

4. Engstellenassistenzsystem nach einem der vorangegangenen Patentansprüche, **dadurch gekennzeichnet, dass** bei Vorhandensein zweier statischer harter Objekte (S/H; S/H) oder zweier statischer weicher Objekte (S/W; S/W) eine querführende Positionierung des Ego-Fahrzeuges (4) mittig zwischen die beiden Objekte vornehmbar ist.

5. Engstellenassistenzsystem nach einem der vorangegangenen Patentansprüche, **dadurch gekennzeichnet, dass** bei Vorhandensein zweier dynamischer harter Objekte (D/H; D/H) entweder eine querführende Positionierung des Ego-Fahrzeuges (4) mittig zwischen die beiden Objekte vornehmbar ist oder der Fahrer zur Fahrzeugübernahme aufgefordert wird.

## Claims

1. A narrow-passage assistance system in a motor vehicle (4) comprising at least one electronic control unit (1) which, depending on the signals of various sensors (2) for sensing lateral obstacles, identifies a narrow passage in the form of the presence of two objects (D/H, S/H, S/W) constricting the ego-vehicle (4) on both sides and controls a transverse positioning of the ego-vehicle (4) between the objects by means of at least one transverse actuator (3), the control unit (1) including a transverse guidance module (5) such that a distinction is drawn between dynamic and static objects, and, when a static object (S/H, S/W) is present on one side and a dynamic object (D/H) is present on the other side of the ego-vehicle (4), a transverse positioning of the ego-vehicle (4) closer to the static object (S/H, S/W) can be performed, **characterised in that** the transverse guidance module (5) is additionally configured such that a distinction is drawn between soft and hard objects, and **in that**, when a hard object (S/H, D/H) is present on one side and a soft object (S/W) is present on the other side, a transverse positioning of the ego-vehicle (4) closer to the soft object (S/W) can be performed.

2. A narrow-passage assistance system according to the preceding claim, **characterised in that**, when a dynamic hard object (D/H) is present on one side and a static hard object (S/H) is present on the other side, a transverse positioning of the ego-vehicle (4) closer to the static object (S/H) can be performed with a greater safety distance than when a dynamic hard object (D/H) and a static soft object (S/W) are present.

3. A narrow-passage assistance system according to one of the preceding claims, **characterised in that**, when a dynamic hard object (D/H) or a static hard object (S/H) is present on one side and a static soft object (S/W) is present on the other side of the ego-vehicle (4), a transverse positioning of the ego-vehicle (4) closer to the static soft object (S/W) at a comparatively short to approximately zero safety distance can be performed.

4. A narrow-passage assistance system according to one of the preceding claims, **characterised in that**, when two static hard objects (S/H; S/H) or two static soft objects (S/W; S/W) are present, a transverse positioning of the ego-vehicle (4) centrally between the two objects can be performed.

5. A narrow-passage assistance system according to one of the preceding claims, **characterised in that**, when two dynamic hard objects (D/H; D/H) are present, either a transverse positioning of the ego-vehicle (4) centrally between the two objects is performed or a driver is requested to take over control of the vehicle.

## Revendications

1. Système d'assistance en cas d'emplacement étroit destiné à un véhicule automobile (4) comprenant au moins une unité de commande électronique (1) qui identifie en fonction de signaux de différents capteurs (2) permettant de détecter des obstacles latéraux, un emplacement étroit sous la forme de la présence de deux objets (D/H, S/H, S/W) limitant de part et d'autre le propre véhicule (4), et commande un positionnement par guidage transversale du propre véhicule (4) entre les objets au moyen d'au moins un actionneur de guidage transversal (3), l'unité de commande (1) comprenant un module de guidage transversal (5) permettant de faire une distinction entre des objets dynamiques et des objets statiques, et, en présence d'un objet statique (S/H, S/W) sur un côté du propre véhicule et d'un objet dynamique (D/H) sur l'autre côté du propre véhicule (4) d'effectuer un positionnement par guidage transversal du propre véhicule (4) plus près de l'objet statique (S/H, S/W),
**caractérisé en ce que**
le module de guidage transversal (5) est en outre réalisé de façon à faire une distinction entre des objets durs et des objets mous et, en présence d'un objet dur (S/H, D/H) sur un côté du propre véhicule et d'un objet mou (S/W) sur l'autre côté du propre véhicule d'effectuer un positionnement par guidage transversal du propre véhicule (4) plus près de l'objet mou (S/W).

2. Système d'assistance en cas d'emplacement étroit conforme à la revendication principale,
**caractérisé en ce qu'**
en cas de présence d'un objet dur dynamique (D/H) sur un côté du propre véhicule et d'un objet dur statique (S/H) sur l'autre côté du propre véhicule un positionnement par guidage transversal du propre véhicule (4) plus près de l'objet statique (S/H) peut être prévu avec une plus grande distance de sécurité que dans le cas de la présence d'un objet dur dynamique (D/H) et d'un objet mou statique (S/W).

3. Système d'assistance en cas d'emplacement étroit conforme à l'une des revendications précédentes,
**caractérisé en ce qu'**
en présence d'un objet dur dynamique (D/H) ou d'un objet dur statique (S/H) d'un côté du propre véhicule et d'un objet mou statique (S/W) de l'autre côté du propre véhicule (4), un positionnement par guidage transversal du propre véhicule (4) plus près de l'objet mou statique (S/W) peut être prévu avec une distance de sécurité comparativement plus faible pouvant aller jusqu'à zéro.

4. Système d'assistance en cas d'emplacement étroit conforme à l'une des revendications précédentes,
**caractérisé en ce qu'**
en présence de deux objets statiques durs (S/H, S/H) ou de deux objets statiques mous (S/W, S/W), un positionnement par guidage transversal du propre véhicule (4) peut être prévu à mi-distance entre les deux objets.

5. Système d'assistance en cas d'emplacement étroit conforme à l'une des revendications précédentes,
**caractérisé en ce qu'**
en présence de deux objets durs dynamiques (D/H, D/H) on peut, soit prévoir un positionnement par guidage dynamique du propre véhicule (4) à mi-distance entre les deux objets, soit commander la reprise du véhicule par le conducteur.
